# EUROPEAN PATENT SPECIFICATION

(11) **EP 1 422 092 B1**
(45) Date of publication and mention of the grant of the patent: **09.11.2005**
(21) Application number: 02026370.3
(22) Date of filing: 25.11.2002
(51) Int. Cl.: B60J 3/02, B60J 3/00

(54) **Sun visor with accessories**
Sonnenblende mit Zubehör
Pare-soleil avec accessoire

(43) Date of publication of application: 26.05.2004
(73) Proprietor: Fico I.T.M., S.A., 08191 Rubi, Barcelona (ES)
(72) Inventor: Fernandez, Miguel Angel, Santa Coloma de Gramanet (ES); Cuadra, Oscar, Torrelles de Llobregat (ES)
(74) Representative: Hess, Peter K. G.

(56) References cited:
- EP-A- 0 525 148
- DE-A- 19 746 356
- US-A- 4 494 789
- US-A- 5 720 509

## Description

### 1. Technical field

The present invention relates to a sun visor with accessories, in particular a sun visor with a vanity mirror. Furthermore, the present invention comprises a method for manufacturing the above sun visor with accessories.

### 1. Prior art

In the prior art different sun visors are known, particularly for the co-drivers side in motor vehicles, which are equipped with additional accessories. The term accessory may comprise for example a vanity mirror, a lamp associated to said vanity mirror or a reading lamp. In the conventional production of sun visors with accessories, at first the sun visor body is manufactured by for example blow molding methods. After the executed manufacture of said sun visor body, its appearance is adapted to the interior of the respective motor vehicle by different known methods. Thereafter, the installation of the accessories in the respective sun visor is carried out. However, it is also possible that the accessories are installed before the outer fashioning of the sun visor is carried out.

The accessory which is exemplary described with reference to a vanity mirror, is mounted in correspondingly provided areas of the sun visor body. According to conventional methods, the mirror is simply clamped or glued. To assure in this way of mounting an exact fit, it is necessary that the mirror as well as the area provided for the mirror in the sun visor body are exactly fitting and do not have any tolerances. However, it is generally known that the exact manufacture of the respective parts induces great costs in mass production so that simpler methods are used and tolerances are permitted. As a consequence, the vanity mirror is mounted in the sun visor body and cannot fall down, however, the process tolerances allow a slight sliding of the vanity mirror in different directions. Since vibrations are generated during the drive and these vibrations are also transmitted to said sun visor with vanity mirror, the process tolerances and, thus, the possible sliding of the vanity mirror in the sun visor body lead to disturbing clattering noises during the drive. Further, it is also possible that the vanity mirror can fall down from its enclosure or can be destroyed by sufficient great process tolerances and respective vibrations during the drive.

A generic sun visor and coating is known from US-A-4 494 789.

So far, this problem was addressed by different approaches of resolution. One possibility consists in the manufacture of the sun visor body with a corresponding press fitting for the vanity mirror. That is, latching means are for example provided for the vanity mirror which clamp or cram it after insertion. This connection method has different disadvantages. On the one hand, the latching tension on the vanity mirror provided by said latching means is too low. Thus, a sliding of the vanity mirror is again possible because of vibrations leading possibly to a further wear of the latching means and therefore also to the falling down of the vanity mirror. On the other hand, there is the disadvantage that excessive stresses are generated in the sun visor body due to the clamping of the vanity mirror. These stresses lead to a curl of the sun visor body so that it cannot be installed in the vehicle. It is, however, also possible that the vanity mirror is damaged based on the too strong mechanical stresses during installation in this sun visor body.

Other fastening methods are also known which eliminate the above problems during latching. For example the vanity mirror or other accessories are cemented in the sun visor body. Based on the used materials for vanity mirrors and other accessories as for example glass and different plastics, adhesives are necessary which are adapted to these different materials and permanently connecting them. These respectively adapted adhesives are special adhesives and, thus, they are very expensive in their purchase. A further disadvantage follows from the fact that these adhesives contain solvents the release of which has an environmental impact. Since this problem of environmental impact becomes of increasing importance for the industry, the use of these special adhesives is also inappropriate for mass production.

The provision of a seal is a further method of fastening a vanity mirror in a sun visor body wherein said seal at first surrounds the outer edge of the vanity mirror to be latched together with it in the sun visor body afterwards. In this manner, process tolerances and later vibrations are absorbed by the seal just if it is made of elastic materials. In this context, it is disadvantageous that the seal has to be produced in a separate method. This method generates further expenses and it is additionally time-consuming. This leads to increased procedure costs for the later sun visor with accessories.

It is therefore a problem of the present invention to provide a low cost sun visor with accessories the parts of which have an exact fit. It is a further problem of the present invention to provide a method for manufacture the above sun visor with accessories.

### 2. Summary of the invention

The present invention relates to a sun visor with accessories, in particular a vanity mirror, wherein the sun visor and the accessories comprise opposite areas and one or both of said opposite areas are provided with a compressible coating wherein tolerances between said sun visor and said accessories are compensated by said coating after the connection of said sun visor and said accessories.

The sun visor according to the invention comprises a sun visor body and different accessories which is selected according to the equipment of the vehicle. Before the assembly of the sun visor, the sun visor body and the respective accessories are produced with certain process tolerances in mass production. To compensate these process tolerances after the assembly of the sun visor, opposite areas of the sun visor and the accessories or respectively one of the areas comprise a compressible coating according to the invention which fills existing gaps and which assures a permanent and stable fit of the accessories, in the sun visor body. This coating according to the invention can be applied to the respective areas with low technical efforts so that its use is by far more cost-effective compared to known seals.

The compressible coating used during manufacture of the sun visor according to the invention is made of compressible material according to a first embodiment and according to a second embodiment it is made of flocks which are applied to the respective areas. Thereby, the thickness of the coating according to the invention is sufficiently big to compensate process tolerances of the sun visor and the accessories.

The compressible coating according to the invention which is applied to selected areas by a simple and cost-effective method to be described later compensates inaccuracy in the shape of the sun visor body and the accessories by its thickness. Thereby, it is assured that the accessories fit well in the provided spacings and that no unpleasant clattering noises are induced in the interior of the motor vehicle by later vibrations. Furthermore, a sliding of the accessories is prevented by the coating according to the invention.

According to a first embodiment wherein a compressible material is used for the coating, this material is compressed after the installation of the accessories in the sun visor body corresponding to the width of the gaps to be filled and subsequently it fills these gaps. In this manner, the compressed material serves on the one hand for an exact fit and on the other hand also for a vibration damping. Thereby, for example the vanity mirror to be mounted is protected from excessive and possibly destroying shocks during the drive.

According to a second embodiment, the compressible coating is formed by flocks which are applied to a correspondingly provided primer and/or an adhesive coating. In particular in view of the flocking of the sun visor body for the outer fashioning and adaptation to the interior of the later motor vehicle, limited technical efforts are necessary to also use existing flocking methods for applying the coating according to the present invention. Dependent on the structure of the used flocks, these also fill the gaps which are generated by existing process tolerances. Further, by the use of flocks for the coating also fashioning aspects are realized which are essential for the appearance of the sun visor with accessories. It is for example possible that gaps caused by production are compensated by the flocked coating and these compensated gaps are not visible since the flocked coating comprises the same colored fashioning as the sun visor body.

Cotton, viscose, polyamide and/or polyester are used as possible flocked materials. For the above mentioned compressible materials PUR, PP, PVC, EPDM or rubber can be used.

The sun visor according to the invention further comprises a fastening means for fastening the accessories. These fastening means comprise for example latching means or other clamping means which are shaped with certain process tolerances in the sun visor body during the manufacture.

The present invention also provides a coating for compensating tolerances between a sun visor and accessories connected to each other and comprising opposite areas wherein at least one of said opposite areas is provided with a coating which compensates tolerances between the sun visor and the accessories after the connection of said sun visor and said accessories.

According to the invention a coating is provided which cost-efficiently and effectively compensates existing process tolerances of parts for example from mass production after these parts are connected to each other. In contrast to the expensive production of shape adapted seals, only selected areas of the parts to be connected are coated so that these coatings compensate the still existing process tolerances after the connection of both parts and thereby assures an exact fit of both parts.

According to different embodiments of the compressible coating according to the invention, it is made of compressible material or it is provided by applying flocks to a primer and/or an adhesive coating. The compressible material and said flocks comprise the already above mentioned properties and functions.

Additionally, the present invention provides a method for connecting a sun visor and accessories without any tolerances wherein said sun visor and said accessories comprise opposite areas, comprising the following steps (1) applying of a compressible coating of at least one of said opposite areas made of a material which compensates tolerances between said sun visor and said accessories in connected state and (2) connecting said sun visor and said accessories.

According to a further preferred embodiment of the method, the coating is made of a compressible material or of flocks.

### 3. Short description of the drawing

In the drawing, presently preferred embodiments of the present invention are exemplary shown:
- Fig. 1:: General view of sun visor with vanity mirror;
- Fig. 2:: Perspective view of a part of the vanity mirror before the installation in the sun visor body.

In the following the preferred embodiments of the invention are explained in detail under reference to the drawing.

### 4. Detailed description of the invention

The present invention relates to a method for connecting two parts wherein process tolerances between the both parts to be connected are compensated by a coating according to the invention. On the basis of this method, it is possible to connect two parts to each other with exact without requiring high accuracy for the parts during their manufacture. Accordingly, two parts are connected to each other by this method which for example are produced cost-effective in mass production. Possible differences in shapes to be adapted to each other of both parts are compensated by the coating according to the invention.

Applications for which the method according to the invention and the therefrom resulting coatings according to the invention can be used, are for example the connecting of a sun visor body with a vanity mirror or with further accessory parts, the installation of glasses in the instrumental panel of motor vehicles and the mounting of glass panes in a picture frame. The mentioned examples illustrate the different functional importance of the coating according to the invention in the different fields of application.

Basically, the coating according to the invention serves for the compensation of possible process tolerances which arise during manufacture of two parts which are later to be connected. During the later connection of these two parts, different sub areas of the first and the second part are arranged in opposite relation. According to the size of the tolerances to be compensated resulting from the respective manufacturing method, it is now possible to apply the coating according to the invention in both opposite areas of the first and the second part or only in one of the opposite areas. Accordingly, tolerances of different size are compensated.

Preferably according to the invention, the compressible coating to be applied is made of compressible material as for example polyester fibers or PUR. According to a further preferred embodiment, a compressible coating according to the invention is made of flocks which are applied to a primer and/or an adhesive coating.

The according to the invention preferred compressible coating made of compressible material or of flocks comprises a thickness sufficient to compensate existing process tolerances of the first and the second part in the connected state. Thus, the coating is compressed in the connected state of the parts. For this reason, both parts are non positively connected by means of the coating of the present invention.

The coating according to the invention fulfills beside the provision of a non positive connection between the first and the second part still further advantageous functions. The coating between the first and the second part is for example compressed in such a way that it serves as a seal. This is of particular importance if for example a glass pane is installed in a picture-frame and in this manner the penetration of dust can be prevented. A further possible embodiment is the mounting of glasses at lanterns which are protected against the penetration of humidity based on the coating according to the invention. The use of the coating according to the invention is more cost-efficient and in the same manner effective compared to the use of known seals. Seals have to be produced in separate methods which on the one hand comprise a plurality of procedure steps and which on the other hand have to be adapted to the respective shape of the area to be sealed. In contrast thereto, the method according to the invention for coating of both parts to be connected can be performed as an intermediate step in a manufacturing cycle. It is essential that for example an exact shape corresponding forming of the coating is not any longer necessary since the shape is already predetermined by the parts to be coated. For this reason, for example the provision of expensive form tools is not necessary.

The coating resulting from the method according to the invention further serves to protect against vibrations. Referring to the already mentioned example of the vanity mirror 3 in a sun visor body 2 in motor vehicles, vibrations during the drive would generate clattering noises of the vanity mirror 3 in the sun visor body 2 in case this vanity mirror 3 is not sufficiently mounted in the sun visor body 2. These vibrations are damped by the use of the coating according to the invention and they do not lead to disturbing clattering noises. Furthermore, the coating according to the invention prevents that the mirror is damaged or even destroyed by the vibrations.

According to a further functional aspect of the present invention, the coating according to the invention comprises a sufficiently high coefficient of friction so that for example a component installed in a positive connection can slide out or can be pushed out only by high efforts. This aspect can be exploited for example by using flocks of different structures. Dependent on the flock structure and the flock material, the flocks provide the surface of the coating according to the invention with properties corresponding to the respective requirements. In this manner, a permanent connection between two parts is also achieved.

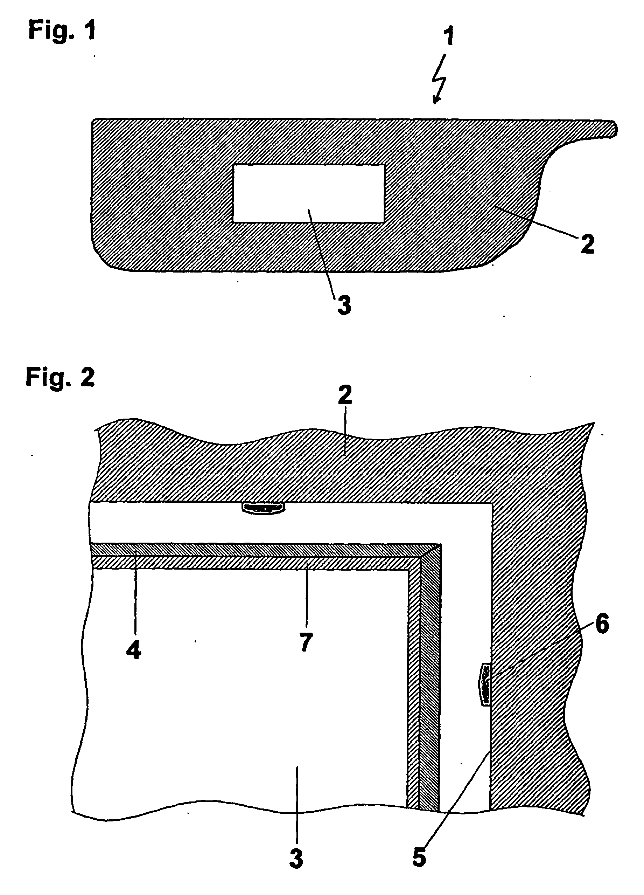

In the following the present invention is explained in detail by means of a preferred embodiment. This embodiment comprises a sun visor with accessory 1, as shown in Figures 1 and 2. The essential components of this sun visor 1 comprise a sun visor body 2 and a vanity mirror 3 as accessories. Preferably according to the invention, the sun visor body 2 is for example manufactured by means of blow molding methods. Subsequently, the appearance of the sun visor body 2 is fashioned corresponding to the interior of the motor vehicle. This can be carried out by the application of flocks 7 or by a clothing cover. Finally, the desired accessory 3 is mounted to the sun visor body 2. These accessories comprise for example vanity mirrors 3 or also lamps.

For mounting the vanity mirror 3 in the blow molded sun visor body 2, an enclosure 5 is provided in this sun visor body 2 having the size of the vanity mirror 3. Said enclosure 5 serves for receiving and mounting the vanity mirror 3 so that the vanity mirror 3 if installed terminates even with the surface of the sun visor body 2.

For mounting the vanity mirror 3 in the sun visor body 2, fastening means 6 are arranged in the enclosure 5. The fastening means 6 can be provided for example by latching means. During the method of manufacture of the sun visor 1 the vanity mirror 3 is pressed into the enclosure 5 to latch into the latching means 6 and to be mounted thereby. The enclosure 5 as well as the provided latching means 6 can only be produced with tolerances as permitted by the manufacturing method. Therefore, the vanity mirror 3 and the enclosure 5 slightly vary in their size and, thus, no exact fit is provided between these parts. For this reason, the vanity mirror 3 is slightly displaceable in the enclosure 5 whereby for example vibrations of the sun visor 1 with vanity mirror 3 can generate unpleasant clattering noises during the drive. It is also conceivable that these vibrations lead to the damage or even to the destruction of the sun visor 1 with vanity mirror 3. To prevent said influences of the vibrations, the sun visor bodies 2 and the vanity mirrors 3 where so far produced with very high accuracy. This high accuracy can be only achieved with very cost intensive methods.

The disadvantages of the prior art are overcome by the present invention in a simple and cost effective manner. The vanity mirror 3 and the enclosure 5 respectively comprise areas which are arranged opposite to each other. These areas would contact each other in case of an exact fit of the vanity mirror 3 and the enclosure 5. For the compensation of the tolerances caused by a production between the vanity mirror 3 and the enclosure 5, one or both of the opposite areas are provided with a coating according to the invention. Thus, this coating serves for the compensation of tolerances between the two parts to be connected, i. e. the vanity mirror 3 and the enclosure 5. Preferably according to the invention, this compressible coating is made of compressible material or of flocks. Conceivable compressible material for the coating are for example PUR, PP, PVC, EPDM or rubber.

These flocks 7 are preferably made of cotton, viscose, polyamide and/or polyester. In order to fasten the flocks 7 at one or both of the opposite areas of the vanity mirror 3 and the enclosure 5, a primer and/or an adhesive coating is applied with conventional methods. Subsequently, the flocks are applied supported by an electrostatic attraction. Based on the different materials and structures of the used flocks, a coating according to the invention is generated which compensates existing manufacturing tolerances. Furthermore, the coating with flocks according to the invention serves for damping the already above mentioned vibrations, for preventing the clattering noises and also for preventing sliding of the vanity mirror 3 inside the enclosure 5. The same functions are also achieved by the coating according to the invention by means of a compressible material.

As can be seen in Fig. 2, sub areas of the edge of the vanity mirror 3 are coated by flocks 7. The coating according to the invention serves on the one hand for a tolerance free fitting of the vanity mirror 3 in the enclosure 5 of the sun visor body 2 and on the other hand for the provision of a color-adapted transition from the sun visor body 2 to the vanity mirror 3. Thus, it is guaranteed that the vanity mirror 3 is seen as an integral part of the sun visor body 2. This objective is particularly achieved by using flocks 7 having the same color as the flocked sun visor body 2. Even if the sun visor body 2 was not fashioned in color by flocks, nevertheless, an arbitrary colored adaptation of the edge of the vanity mirror to the used sun visor body 2 can result from the flocks 7 according to the invention. Based on the present invention, manufacturing tolerances which otherwise would appear as black gaps, are filled by a material which is adapted in color to the outer fashioning of the sun visor 1 with vanity mirror 3.

According to the method on which the invention is based, at first the opposite areas of the vanity mirror 3 and the enclosure 5 of the sun visor body 2 are provided with a coating according to the invention. It is also possible that only one of the opposite areas is coated by the coating according to the invention as long as it is sufficient to compensate existing tolerances. If the already mentioned flocks 7 are used for the coating according to the invention, these are applied to a primer or an adhesive coating according to known methods wherein this process is supported by electrostatical attraction. After the coating according to the invention has been applied to the edge area of the vanity mirror 3, the vanity mirror 3 comprises dimensions which slightly exceed the size of the enclosure 5 in the sun visor body 2. Based on the compressibility of the coating according to the invention, these differences in size are compensated compressing the coating according to the invention by the opposite area of the enclosure 5. In this simple manner, existing tolerances are compensated and existing, unsidely gaps are filled. After the connection, thus, a fixed seat of the vanity mirror 3 in the sun visor body 2 is guaranteed which on the one hand is supported by additional fastening means 6 and which on the other hand prevents clattering of the vanity mirror 3 in the sun visor body 2.

### List of reference signs

- 1: sun visor with vanity mirror
- 2: sun visor body
- 3: vanity mirror
- 4: flocked edge of the vanity mirror
- 5: enclosure in the sun visor body
- 6: latching means
- 7: flocks

## Claims

1. Sun visor (1, 2) with accessories (3), in particular a vanity mirror (3), wherein
the sun visor (1, 2) and the accessories (3) comprise opposite areas and one or both of said opposite areas are provided with a compressible coating (4),
**characterized in that**
tolerances between said sun visor (1, 2) and said accessories (3) are compensated by said coating (4) after the connection of said sun visor (1, 2) and said accessories (3).

2. Sun visor (1, 2) according to claim 1, wherein said compressible coating (4) is made of compressible material or of flocks (7).

3. Sun visor (1, 2) according to claim 2, wherein the thickness of said coating is adequate to compensate tolerances of said sun visor (1, 2) and said accessories (3).

4. Sun visor (1, 2) according to claim 3, wherein said flocks (7) are made of cotton, viscose, polyamide and/or polyester.

5. Sun visor (1,2) according to claim 4, wherein said flocks (7) are applied to an adhesive coating.

6. Sun visor (1, 2) according to claim 2, wherein said compressible material is made of PUR, PP, PVC, EPDM or rubber.

7. Sun visor (1, 2) according to claim 1 further comprising fastening means (6) for fastening said accessories (3).

8. Coating (4) for compensating tolerances between a sun visor (1, 2) and accesstories (3) connected to each other and comprising opposite areas wherein at least one of said opposite areas is provided with a coating (4) **characterized in that** this coating compensates tolerances between the sun visor (1, 2) and the accessories (3) after the connection of said sun visor (1, 2) and said accessories (3).

9. Coating (4) according to claim 8, wherein said coating (4) is compressible and it is made of flocks (7).

10. Coating (4) according to claim 9, wherein said flocks (7) are applied to an adhesive coating.

11. Coating (4) according to claim 10, wherein said flocks (7) are made of cotton, viscose, polyamide and/or polyester.

12. Coating (4) according to claim 8, wherein said coating (4) is compressible and it is made of compressible material.

13. Coating (4) according to claim 12, wherein said compressible material is made of PUR, PP, PVC, EPDM or rubber

14. Coating (4) according to claim 8, wherein said coating (4) is applied to one or both of said opposite areas of said sun visor (1, 2) and said accessories (3).

15. Method for connecting a sun visor (1, 2) and accessories (3) without any tolerances wherein said sun visor (1, 2) and said accessories (3) comprise opposite areas, comprising the following steps:
a. Applying of a compressible coating of at least one of said opposite areas made of a material (7) which compensates tolerances between said sun visor (1,2) and said accessories (3) in connected state and
b. connecting said sun visor (1, 2) and said accessories (3).

16. Method according to claim 15, wherein said coating (4) is made of a compressible material or of flocks (7).

17. Method according to claim 16, wherein said compressible material is made of PUR, PP, PVC, EPDM or rubber

18. Method according to claim 16, wherein said flocks (7) are made of cotton, viscose, polyamide and/or polyester.

19. Method according to claim 18, wherein said flocks (7) are electro statically applied.

## Patentansprüche

1. Sonnenblende (1, 2) mit Zubehörteilen (3), insbesondere einem Kosmetikspiegel (3), wobei
die Sonnenblende (1, 2) und die Zubehörteile (3) gegenüberliegende Bereiche aufweisen und einer oder beide der gegenüberliegenden Bereiche mit einer komprimierbaren Beschichtung (4) versehen ist bzw. sind; **dadurch gekennzeichnet, dass**
Toleranzen zwischen der Sonnenblende (1, 2) und den Zubehörteilen (3) nach dem Verbinden der Sonnenblende (1, 2) und der Zubehörteile (3) durch die Beschichtung (4) ausgeglichen werden.

2. Sonnenblende (1, 2) gemäß Anspruch 1, wobei die komprimierbare Beschichtung (4) aus einem komprimierbaren Material oder aus Flocken (7) besteht.

3. Sonnenblende (1, 2) gemäß Anspruch 2, wobei die Beschichtungsdicke ausreichend ist, um Toleranzen der Sonnenblende (1, 2) und der Zubehörteile (3) auszugleichen.

4. Sonnenblende (1, 2) gemäß Anspruch 3, wobei die Flocken (7) aus Baumwolle, Viskose, Polyamid und/oder Polyester bestehen.

5. Sonnenblende (1, 2) gemäß Anspruch 4, wobei die Flocken (7) auf eine Klebstoffschicht aufgebracht sind.

6. Sonnenblende (1, 2) gemäß Anspruch 2, wobei das komprimierbare Material aus PUR, PP, PVC, EPDM oder Gummi besteht.

7. Sonnenblende (1, 2) gemäß Anspruch 1, weiterhin aufweisend Befestigungsmittel (6) zum Befestigen der Zubehörteile.

8. Beschichtung (4) zum Ausgleichen von Toleranzen zwischen einer Sonnenblende (1, 2) und Zubehörteilen (3), die miteinander verbunden sind und gegenüberliegende Bereiche aufweisen, wobei mindestens einer der gegenüberliegenden Bereiche eine Beschichtung (4) aufweist, **dadurch gekennzeichnet, dass** diese Beschichtung nach dem Verbinden der Sonnenblende (1, 2) und der Zubehörteile (3) Toleranzen zwischen der Sonnenblende (1, 2) und den Zubehörteilen (3) ausgleicht.

9. Beschichtung (4) gemäß Anspruch 8, wobei die Beschichtung (4) komprimierbar ist und aus Flocken (7) besteht.

10. Beschichtung (4) gemäß Anspruch 9, wobei die Flocken (7) auf eine Klebstoffschicht aufgebracht sind.

11. Beschichtung (4) gemäß Anspruch 10, wobei die Flocken (7) aus Baumwolle, Viskose, Polyamid und/oder Polyester bestehen.

12. Beschichtung (4) gemäß Anspruch 8, wobei die Beschichtung (4) komprimierbar ist und aus einem komprimierbaren Material besteht.

13. Beschichtung (4) gemäß Anspruch 12, wobei das komprimierbare Material (4) aus PUR, PP, PVC, EPDM oder Gummi besteht.

14. Beschichtung (4) gemäß Anspruch 8, wobei die Beschichtung (4) auf eine oder auf beide der gegenüberliegenden Bereiche der Sonnenblende (1, 2) und der Zubehörteile (3) aufgebracht ist.

15. Verfahren zum toleranzfreien Verbinden von einer Sonnenblende (1, 2) und Zubehörteilen (3), wobei die Sonnenblende (1, 2) und die Zubehörteile (3) gegenüberliegende Bereiche umfassen, die folgenden Schritte aufweisend:
a. Aufbringen einer komprimierbaren Beschichtung (4) auf mindestens einen der gegenüberliegenden Bereiche bestehend aus einem Material, das Toleranzen zwischen der Sonnenblende (1, 2) und den Zubehörteilen (3) im verbundenen Zustand ausgleicht, und
b. Verbinden der Sonnenblende (2) und der Zubehörteile (3).

16. Verfahren gemäß Anspruch 15, wobei die Beschichtung (4) aus einem komprimierbaren Material oder aus Flocken (7) besteht.

17. Verfahren gemäß Anspruch 16, wobei das komprimierbare Material aus PUR, PP, PVC, EPDM oder Gummi besteht.

18. Verfahren gemäß Anspruch 16, wobei die Flocken (7) aus Baumwolle, Viskose, Polyamid und/oder Polyester bestehen.

19. Verfahren nach Anspruch 18, wobei die Flocken (7) elektrostatisch aufgebracht werden.

## Revendications

1. Pare-soleil (1, 2) avec accessoires (3), en particulier un miroir de courtoisie (3), dans lequel :
le pare-soleil (1, 2) et les accessoires (3) comprennent des zones opposées et une ou l'ensemble desdites zones opposées est muni d'un revêtement compressible (4),
**caractérisé en ce que**
les tolérances entre ledit pare-soleil (1, 2) et lesdits accessoires (3) sont compensées par ledit revêtement (4) après la connexion dudit pare-soleil (1, 2) et desdits accessoires (3).

2. Pare-soleil (1, 2) selon la revendication 1, dans lequel ledit revêtement compressible (4) est fait d'une matière compressible ou de flocs (7).

3. Pare-soleil (1, 2) selon la revendication 2, dans lequel l'épaisseur dudit revêtement est adéquate pour compenser les tolérances dudit pare-soleil (1, 2) et desdits accessoires (3).

4. Pare-soleil (1, 2) selon la revendication 3, dans lequel lesdits flocs (7) sont faits de coton, de viscose, de polyamide et/ou de polyester.

5. Pare-soleil (1, 2) selon la revendication 4, dans lequel lesdits flocs (7) sont appliqués à un revêtement adhésif.

6. Pare-soleil (1, 2) selon la revendication 2, dans lequel ladite matière compressible est faite de PUR, PP, PVC, EPDM ou caoutchouc.

7. Pare-soleil (1, 2) selon la revendication 1, comprenant de plus un moyen de fixation (6) pour fixer lesdits accessoires (3).

8. Revêtement (4) pour compenser des tolérances entre un pare-soleil (1, 2) et des accessoires (3) reliés les uns aux autres et comprenant des zones opposées dans lesquelles au moins une desdites zones opposées est munie d'un revêtement (4), **caractérisé en ce que** ce revêtement compense des tolérances entre le pare-soleil (1, 2) et les accessoires (3) après la connexion dudit pare-soleil (1, 2) et desdits accessoires (3).

9. Revêtement (4) selon la revendication 8, dans lequel ledit revêtement (4) est compressible et fait de flocs (7).

10. Revêtement (4) selon la revendication 9, dans lequel lesdits flocs (7) sont appliqués à un revêtement adhésif.

11. Revêtement (4) selon la revendication 10, dans lequel lesdits flocs (7) sont faits de coton, de viscose, de polyamide et/ou de polyester.

12. Revêtement (4) selon la revendication 8, dans lequel ledit revêtement (4) est compressible et fait de matière compressible.

13. Revêtement (4) selon la revendication 12, dans lequel ladite matière compressible est faite de PUR, PP, PVC, EPDM ou caoutchouc.

14. Revêtement (4) selon la revendication 8, dans lequel ledit revêtement (4) est appliqué à une ou à l'ensemble desdites zones opposées dudit pare-soleil (1, 2) et desdits accessoires (3).

15. Procédé pour relier un pare-soleil (1, 2) et des accessoires (3) sans aucune tolérance, dans lequel ledit pare-soleil (1, 2) et lesdits accessoires (3) comprennent des zones opposées, comprenant les étapes consistant à :
a. appliquer un revêtement compressible d'au moins une desdites zones opposées faites d'une matière (7) qui compense des tolérances entre ledit pare-soleil (1, 2) et lesdits accessoires (3) dans l'état relié, et
b. relier ledit pare-soleil (1, 2) et lesdits accessoires (3).

16. Procédé selon la revendication 15, dans lequel ledit revêtement (4) est fait d'une matière compressible ou de flocs (7).

17. Procédé selon la revendication 16, dans lequel ladite matière compressible est faite de PUR, PP, PVC, EPDM ou caoutchouc.

18. Procédé selon la revendication 16, dans lequel lesdits flocs (7) sont faits de coton, de viscose, de polyamide et/ou de polyester.

19. Procédé selon la revendication 18, dans lequel lesdits flocs (7) sont appliqués de manière électrostatique.
